# EUROPÄISCHE PATENTSCHRIFT

(11) **EP 2 887 038 B1**
(45) Veröffentlichungstag und Bekanntmachung des Hinweises auf die Patenterteilung: **10.04.2019**
(21) Anmeldenummer: 14196286.0
(22) Anmeldetag: 04.12.2014
(51) Int. Cl.: G01K 11/32, G01N 25/66, G01N 21/43

(54) **Faseroptische Messvorrichtung**
Fibre optic measuring device
Dispositif de mesure à fibre optique

(30) Priorität: 18.12.2013 DE 102013114284
(43) Veröffentlichungstag der Anmeldung: 24.06.2015
(73) Patentinhaber: Hochschule Niederrhein, 47805 Krefeld (DE)
(72) Erfinder: Nieß, Christoph, 47279 Duisburg (DE); Uebel, Dennis, 47800 Krefeld (DE); Elsbrock, Josef, 46485 Wesel (DE); Büddefeld, Jürgen, 47239 Duisburg (DE)
(74) Vertreter: Viering, Jentschura & Partner mbB Patent- und Rechtsanwälte

(56) Entgegenhaltungen:
- DE-B4-102005 016 640
- DE-T2- 3 587 109
- US-A- 4 986 671
- US-A- 5 004 913

## Beschreibung

Die Erfindung richtet sich auf eine faseroptische Messvorrichtung mit einem optisch transparenten Sensorkopf, der mit zumindest einer Lichtsendefaser und zumindest einer Lichtempfangsfaser verbunden ist, und mit einer Lichtquelle, die direkt oder wirkungsmäßig mit der Lichteingangsfaser verbunden ist, wobei die Lichtsendefaser zumindest einen Teil des Lichtes der Lichtquelle in den Sensorkopf leitet, welches an zumindest einer optischen Grenzschicht des Sensorkopfes mindestens einmal reflektierbar ist und in die Lichtempfangsfaser auskoppelbar ist, wobei die Lichtempfangsfaser mit einem Lichtdetektor verbunden ist.

Weiterhin richtet sich die Erfindung auf ein Verfahren zur Bestimmung eines Betauungszustandes und einer Temperatur eines Sensorkopfes.

In vielen technischen und wissenschaftlichen Anwendungen ist eine Messung der Temperatur, des Taupunktes bzw. der Luftfeuchte oder auch nur eine Überwachung auf Kondensation notwendig. Teilweise werden dabei auch weitere Anforderungen gestellt, beispielsweise in Form einer hohen Immunität gegenüber elektromagnetischen Feldern, teils auch in Form möglichst geringer Abstrahlung aus dem Sensor heraus. Das Vorhandensein von elektrischen Leitern im Sensor ist in diesen beiden Fällen nicht erwünscht oder es ist gar nicht tolerierbar. Ebenso sind die Anforderungen an die Lebensdauer der Sensorik oft sehr hoch, da ein Austausch einzelner Komponenten oder der gesamten Sensoreinrichtung mit einem hohen Zeit- und Kostenaufwand verbunden ist.

Im Stand der Technik sind eine Reihe von Sensoren bekannt, die beispielsweise die Temperatur oder Betauungsvorgänge oder die Luftfeuchte erfassen.

Zur Erfassung der Temperatur kommen dabei insbesondere temperaturabhängige Widerstandselemente oder Thermoelemente, bzw. für berührungslose Messungen Pyrometer zum Einsatz. Des Weiteren sind optische Sensoren nach verschiedenen Messprinzipien bekannt, wie beispielsweise Sensoren mit einer Beschichtung aus fluoreszierendem Material am Ende eines Lichtwellenleiters, die aus der temperaturabhängigen Abklingzeit der Lumineszenz die Temperatur bestimmen. Zu dieser Art von Sensoren gehört beispielsweise der in der Patentschrift DE 3 587 109 T2 beschriebene Sensor, der auf der Messung des abnehmenden Signals der Lumineszenzstrahlung beruht, wobei die zeitliche Intensitätsfunktion der Lumineszenz abhängig ist von der Temperatur des lumineszenten Materials.

Zur Messung eines Betauungszustandes oder der Luftfeuchte werden des Weiteren vor allem kapazitive Sensoren verwendet, aber auch solche auf der Basis einer Leitfähigkeitsmessung. Des Weiteren sind optische Ansätze bekannt, die aufgrund des Reflexionsverhaltens an einer Grenzfläche den Benetzungszustand eines Sensors ermitteln. Hierzu gehört beispielsweise die in der DE 10 2005 016 640 B4 beschriebene faseroptische Sensorvorrichtung. Bei diesen Verfahren erfolgt die Bestimmung der Benetzung oder Betauung einer Oberfläche eines Sensorkopfes aus der Intensitätsänderung zwischen eingekoppeltem und ausgekoppeltem Licht, wobei die Änderung der Lichtintensität in Abhängigkeit von der Reflektion an der benetzten Oberfläche steht. Die faseroptische Sensorvorrichtung umfasst einen Sensorkopf, der mit einer Lichtsendefaser verbunden ist, in die Licht von einer Lichtquelle eingekoppelt werden kann. Eine Lichtempfangsfaser ist mit einem Lichtdetektor verbunden, der das empfangene Licht mittels einer Auswerteelektronik auswertet. Um die Empfindlichkeit der Detektion zu verbessern, sind zwei hohlgewölbte Grenzflächen vorgesehen, wobei das auf die erste hohlgewölbte Grenzfläche auftreffende Licht auf die zweite hohlgewölbte Grenzfläche reflektiert wird und von dieser Fläche in die Lichtempfangsfaser ausgekoppelt wird.

Aus US 4,986,671 ist ein Sensor als Teil einer faseroptischen Messvorrichtung bekannt, mit dem bis zu drei Parameter, d.h. Druck, Temperatur und Wärmefluss oder Fluidfluss gemessen werden können. Ein formfestes elastisch verformbares optisches Element ist an einem Ende einer optischen Faser gebildet, wobei einander benachbart Materialien zur Lichtreflexion sowie temperaturabhängige Materialien an einer konvexen Oberfläche des optischen Elements angebracht sind. Dabei ist die Menge an reflektiertem Licht dem Druck gegen das optische Element proportional und das temperaturabhängige Material ist ein lumineszierendes Material. Über dem lumineszierenden Material ist eine Lage eines Infrarotlicht absorbierenden Materials gebildet, welches eine Bestimmung von Wärme- oder Fluidfluss erlaubt.

Der Erfindung liegt die Aufgabe zugrunde, eine faseroptische Messvorrichtung zu schaffen, die sich durch eine weitgehende Unempfindlichkeit gegenüber elektromagnetischen Störungen und sehr geringe eigene Abstrahlungen auszeichnet und mit der die Messung mehrerer Parameter wie ein Betauungszustand und eine Temperatur mittels eines Sensors möglich ist. Des Weiteren soll sich die Messvorrichtung durch einen kompakten und miniaturisierten Aufbau, eine kostengünstige und einfache Fertigung und zudem durch eine hohe Messempfindlichkeit auszeichnen.

Diese Aufgabe wird durch eine faseroptische Messvorrichtung gemäß Anspruch 1 und durch ein Verfahren gemäß Anspruch 14 gelöst. Bevorzugte Ausführungsformen sind Gegenstand der Unteransprüche.

Bei einer faseroptischen Messvorrichtung der eingangs näher bezeichneten Art wird diese Aufgabe erfindungsgemäß dadurch gelöst, dass in dem Sensorkopf zumindest ein temperaturabhängiger Lumineszenzfarbstoff eingelagert ist, der mittels des in die Lichtsendefaser eingekoppelten Lichtes anregbar ist, wobei eine Abklingzeit eines Lumineszenzlichtes des Lumineszenzfarbstoffs von dem Lichtdetektor messbar ist, wobei das Lumineszenzlicht mittels der Lichtempfangsfaser an den Lichtdetektor übertragbar ist.

Des Weiteren wird die vorstehende Aufgabe gelöst durch ein Verfahren, bei dem Licht von einer Lichtquelle über eine Lichtsendefaser in den Sensorkopf gesendet wird, der eine optische wirksame Grenzschicht und zumindest einen Lumineszenzfarbstoff aufweist; das Licht an der Grenzschicht reflektiert und in eine Lichtempfangsfaser ausgekoppelt und einem Lichtdetektor zugeführt wird; eine Lichtintensität des ausgekoppelten Lichtes von dem Lichtdetektor gemessen wird; und aus einem Verhältnis zwischen der Intensität des in die Lichtempfangsfaser ausgekoppelten Lichtes zu der Intensität des eingekoppelten Lichtes der Betauungszustand ermittelt wird; und von dem Lumineszenzfarbstoff ausgesendetes Lumineszenzlicht in die Lichtempfangsfaser ausgekoppelt und dem Lichtdetektor zugeführt wird; eine Intensität des Lumineszenzlichtes in Abhängigkeit von der Zeit gemessen wird; eine Abklingzeit für die Intensität des Lumineszenzlichtes bestimmt wird und aus der Abklingzeit die Temperatur des Sensorkopfes ermittelt wird.

Vorteilhafte Weiterbildungen und zweckmäßige Ausgestaltungen sind Gegenstand der jeweiligen Unteransprüche.

Zur Lösung der vorstehenden Aufgabe schlägt die Erfindung somit vor, die Messung von Betauungsvorgängen und die Messung der Temperatur in einem Sensorkopf zu integrieren. Somit können die Umgebungstemperatur sowie Betauungsvorgänge gleichzeitig gemessen werden. Die Betauung wird durch die Messung des eingekoppelten Lichtes und des reflektierten Lichtes durch Bildung eines Quotienten bestimmt. Die Temperatur des Sensorkopfes wird durch die temperaturabhängige Abklingzeit der Intensitätskurve zumindest eines im Sensorkopf eingebetteten Lumineszenzfarbstoffes bestimmt. Ein Lumineszenzlicht des Lumineszenzfarbstoffes wird durch einen Anregungslichtimpuls ausgelöst und mit dem gleichen Lichtdetektor erfasst, der auch für die Detektion des reflektierten Lichtes verwendet wird, so dass auf einen Zusatzdetektor verzichtet werden kann. Aus der Abklingzeit des Lumineszenzsignals kann bei passender Farbstoffauswahl die Temperatur bestimmt werden. Unter Lumineszenz werden im Rahmen der Erfindung allgemein lichterzeugende Prozesse durch die Anregung eines Farbstoffs durch Licht und die Aussendung von Lumineszenzlicht verstanden und hierunter fallen auch Fluoreszenz und Phosphoreszenz.

Neben der Feststellung eines Betauungszustandes ist in vielen Anwendungen die Kenntnis der Temperatur wichtig. Diese Temperatur kann nun in gleicher Weise wie der Betauungszustand optisch ermittelt werden, so dass eine Messung der Temperatur über elektrische Größen wie einen temperaturabhängigen Widerstand vor Ort nicht mehr erforderlich ist. Mit der vorliegenden Erfindung können somit nun beide Messgrößen gleichzeitig und stromlos von einem einzigen Lichtdetektor erfasst werden, ohne dabei störanfällig gegenüber elektromagnetischen Feldern zu sein oder selber solche abseits von Licht eines definierten Wellenlängenbereichs abzugeben. Der Sensorkopf weist keine elektronischen Bauteile auf, und ist darüber hinaus sogar völlig frei von Metallteilen. Somit zeichnet sich der Sensorkopf durch einen sehr einfachen und kompakten Aufbau aus, und ist entsprechend kostengünstig zu fertigen. Durch die faseroptische Anregung ist eine weite räumliche Trennung von der Auswerteelektronik möglich, die durch den Wegfall von optischen Filtern ebenfalls kompakt aufgebaut und kostengünstig gefertigt werden kann. Des Weiteren ist eine hohe Messgenauigkeit realisierbar, da die zeitabhängige Charakteristik der Abklingfunktion nur von der Zusammensetzung des Farbstoffs und nicht von mechanischen Fertigungstoleranzen oder der Länge der Lichtleitfaser abhängig ist.

Dabei kann für die Messung des Betauungszustandes Licht verwendet werden, mit dem auch eine Lumineszenzanregung möglich ist. Durch den Aufbau der Messung mit einer reinen Intensitätsmessung für den Betauungszustand und einer reinen Messung des Zeitverhaltens für die Temperaturmessung kann für beide Messungen derselbe Detektor verwendet werden, ohne dass sich Probleme mit der Trennung der Signale ergeben. Zudem wird die geringe Farbstoffmenge bereits durch das Licht einer kurzwelligen Leuchtdiode stark überangeregt, so dass sich auch bei verminderter Reflexion durch Betauung keine Probleme in der Messgenauigkeit der Temperatur ergeben. Dadurch ist die Verwendung einer einzigen Lichtquelle ausreichend.

Es ist aber im Rahmen der Erfindung auch möglich, dass eine erste Lichtquelle für die Einkopplung von Licht zur Reflektion an einer Grenzschicht des Sensorkopfes und eine zweite Lichtquelle für die Anregung des Lumineszenzfarbstoffs vorgesehen ist. In diesem Fall kann eine Lichtquelle mit oder nahe an der besten Wellenlänge zur Anregung des Lumineszenzfarbstoffs und eine zweite mit oder nahe am Emissionsmaximum des Lumineszenzfarbstoffs verwendet werden, wodurch die Verwendung eines schmalbandigen Lichtdetektors möglich wird.

In einer Weiterentwicklung der Erfindung ist vorgesehen, dass der erste und der zweite Lichtleiter eine gemeinsame Lichtleitfaser zum Senden und Empfangen ausbilden für die Einkopplung des Lichtes und die Auskopplung des reflektierten und des Lumineszenzlichtes. Hierdurch kann der Aufbau der Messvorrichtung vereinfacht werden, da nur eine einzige Lichtleitfaser für den Sensorkopf erforderlich ist.

In einer Ausgestaltung sieht die Erfindung vor, dass als Lumineszenzfarbstoff anorganische und/oder organische Farbstoffe und/oder Nanokristalle verwendet werden.

In einer besonderen Ausgestaltung sieht die Erfindung vor, dass als Lumineszenzfarbstoff Magnesiumfluorgermanat verwendet wird.

Von besonderem Vorteil ist es, wenn der Sensorkopf aus PMAA (Polymethylmethacrylat) besteht. PMMA ist ein optisch transparentes, chemisch unempfindliches Material, dessen Lichtbrechungsverhalten es erlaubt, in einem weiten Winkelbereich an Auftreffwinkeln einerseits Totalreflektion im trockenen Zustand an einer Grenzfläche zu Luft zu erreichen, andererseits aber an derselben Grenzfläche in mit Wasser benetztem Zustand eine weitgehende Auskopplung des Lichts und damit einen gut messbaren Unterschied im Reflexionsverhaltens des Sensorkopfes zu erreichen.

In einer besonders einfachen Ausgestaltung der Erfindung wird der Farbstoff annähernd homogen oder völlig homogen im Sensorkopf verteilt, um eine einfache Fertigung aus nur einem Material zu ermöglichen.

In einer Weiterentwicklung sieht die Erfindung vor, dass der Lumineszenzfarbstoff in Form einer Schicht vorliegt, wodurch eine bessere Einkopplung in die Lichtleitfaser ermöglicht ist. Insbesondere ist vorgesehen, die Farbstoffschicht lokal im Bereich der Empfangsfaser anzuordnen, da hierdurch eine besonders effektive Anregung durch das reflektierte Licht der Lichtsendefaser sowie eine besonders effektive Einkopplung des Lumineszenzlichts in die Lichtempfangsfaser erreicht wird. Auf weitere Lichtleitfasern, Lichtquellen oder Lichtdetektoren kann so verzichtet werden.

Insbesondere ist erfindungsgemäß vorgesehen, dass unterschiedliche Sensorkopfgeometrien eingesetzt werden können.

In einer Weiterentwicklung der Erfindung ist vorgesehen, dass die Sensorkopfoberfläche durch ein Kühl- und/oder Heizsystem gezielt temperiert werden kann. Dabei ist insbesondere vorgesehen, dass die Sensorkopfoberfläche das kälteste nach außen gerichtete Strukturelement ist.

In einer Weiterentwicklung der Erfindung kann eine Direkttemperierung durch Aufbringen von Metall- und Halbleiterstrukturen nach dem Funktionsprinzip des Peltier-Effektes erfolgen.

In einer Ausgestaltung sieht die Erfindung vor, Kühlmittel, wie zum Beispiel Glykol, für die Kühlung einzusetzen, um einen von Metallteilen wie auch von elektrischen oder elektronischen Bauteilen freien Sensorkopf zu erreichen.

Insgesamt zeichnet sich der beschriebene Aufbau somit dadurch aus, dass gleichzeitig ein Betauungszustand und die Umgebungstemperatur gemessen werden kann. Es kann der gleiche Lichtdetektor für die Auswertung eines Lichtsignals zur Bestimmung des Betauungszustandes und eines Lichtsignals für die Bestimmung einer Temperatur genutzt werden. Hierdurch kann auf elektrische und/oder elektronische Bauelemente verzichtet werden, so dass eine erfindungsgemäße Messvorrichtung insbesondere in Umgebungen eingesetzt werden kann, in denen sich elektromagnetische Felder störend auswirken würden. Darüber hinaus kann durch eine Ergänzung des Sensorkopfes mit einer Heiz- und/oder Kühlmöglichkeit, beispielsweise im Rahmen eines Peltier-Elementes, der Taupunkt und damit eine relative Luftfeuchte gemessen werden. Darüber hinaus ist prinzipiell die Messung in anderen Gasen als Luft möglich.

Die Erfindung ist nachstehend anhand einer Zeichnung beispielhaft näher erläutert. In der Zeichnung zeigen
- Fig. 1: eine schematische Darstellung eines Sensorkopfes einer faseroptischen Messvorrichtung;
- Fig. 2: eine schematische Darstellung des Abklingverhaltens der Intensität des Lumineszenzlichtes eines Lumineszenzfarbstoffes.

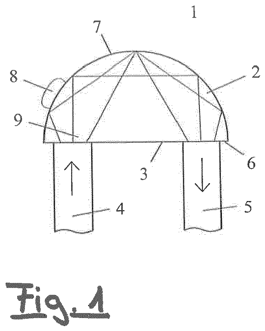

Die Figur 1 zeigt in einer schematischen Schnittdarstellung eine insgesamt mit 1 bezeichnete faseroptische Messvorrichtung. Die faseroptische Messvorrichtung 1 besteht aus einem Sensorkopf 2, der in der hier gezeigten Ausführungsform halbrund ausgebildet ist. An eine Unterseite 3 des Sensorkopfes 2 sind eine Lichtsendefaser 4 sowie eine Lichtempfangsfaser 5 angeordnet. In dem hier abgebildeten Ausführungsbeispiel sind die beiden Lichtfasern 4, 5 jeweils in einem Randbereich 6 des Sensorkopfes 2 angeordnet. Im Rahmen der Erfindung ist es jedoch auch denkbar, dass die Lichtsendefaser 4 und die Lichtempfangsfaser 5 in einem mittleren Bereich des Sensorkopfes 2 angeordnet sind. Gemäß einer weiteren Ausführungsform der Erfindung kann es weiterhin vorgesehen sein, nur eine einzige Lichtleitfaser vorzusehen, die gleichzeitig die Funktionen des Einkoppelns und des Auskoppelns von Licht in den Sensorkopf 2 übernimmt.

In Figur 1 ist die Lichtquelle, die mit der Lichtsendefaser 4 verbunden ist, nicht dargestellt. Dies gilt auch für den Lichtdetektor, der mit der Lichtempfangsfaser 5 verbunden ist. Des Weiteren kann eine Auswerteeinheit vorhanden sein. Die Lichtquelle kann Licht im kurzwelligen und/oder im sichtbaren Wellenlängenbereich aussenden. Es kann sich aber auch um zwei Lichtquellen handeln, die jeweils Licht in unterschiedlichen Wellenlängenbereich aussenden. Insbesondere ist vorgesehen, dass die Lichtquelle Licht im Bereich von 390 - 420 nm aussendet.

Der Sensorkopf ist vorzugsweise einstückig hergestellt und besteht aus einem optisch transparenten Material wie z. B. einem polymeren Kunststoff Polymethylmethacrylat (PMMA), das bevorzugt einen Brechungsindex von n > 1 aufweist. Vorzugsweise soll der Brechungsindex n des Sensorkopfes 2 so gewählt werden, dass er mit der Kernbrechzahl des verwendeten Lichtwellenleiters der Lichtsendefaser 4 und der Lichtempfangsfaser 5 identisch ist.

Vorzugsweise wird die Größe des Sensorkopfes in Abhängigkeit von der Apertur bzw. dem Akzeptanzwinkel sowie dem Durchmesser des verwendeten Lichtleiters bestimmt. Die eingangsseitig eingekoppelte Lichtmenge sollte im unbetauten Zustand bei einer bestimmten Bezugstemperatur T so vollständig wie möglich, d.h. abgesehen von nicht zu vermeidenden Streuverlusten, an einer Grenzfläche 7 mindestens einmal reflektiert werden und in die Lichtempfangsfaser 5 ausgekoppelt werden.

Das Licht wird hierzu von einer in der Figur 1 nicht dargestellten Lichtquelle erzeugt und über die Lichtsendefaser 4 in den Sensorkopf 2 eingekoppelt. Um die Anzahl der verwendeten Bauteile der Messvorrichtung 1 so gering wie möglich zu halten, wird möglichst auf weitere Linsenelemente zur Ausrichtung und Fokussierung des eingekoppelten Lichtes verzichtet, jedoch kann dies im Rahmen der Erfindung grundsätzlich vorgesehen sein. Die Lichtsendefaser 4 ist daher so ausgerichtet, dass eine optimale Reflexion des eingekoppelten Lichtes an der Grenzschicht 7 erfolgen kann.

Im betauungsfreien Zustand wird das von der Lichtsendefaser 4 in den Sensorkopf 2 eingekoppelte Licht aufgrund der geometrischen Gestaltung des Sensorkopfes 2 zur Lichtempfangsfaser 5 reflektiert und kann unter Vernachlässigung der Streuverluste nahezu vollständig detektiert werden.

Im betauten Zustand wird ein Teil des eingekoppelten Lichtes nicht reflektiert, sondern an der Grenzfläche 7 des Sensorkopfes 2 teilweise gebrochen und aus dem Sensorkopf 2 nach außen abgestrahlt. Daher nimmt die Intensität des an der Lichtempfangsfaser 5 ankommenden Lichtes ab. Somit kann aus der Intensitätsänderung des reflektierten Lichtes, das mittels der Lichtempfangsfaser 5 einem hier nicht dargestellten Lichtdetektor zugeführt wird, der Betauungszustand ermittelt werden kann. In der Fig. 1 sind mit 8 bezeichnete Flüssigkeitströpfchen bei einer einsetzenden Betauung dargestellt.

Im Rahmen der Erfindung sind verschiedene Sensorkopfformen und Gestaltungen der optischen Grenzfläche möglich, um eine möglichst genaue Erfassung des Betauungszustandes des Sensorkopfes 2 zu ermöglichen. In einer bevorzugten Ausgestaltung ist der Sensorkopf 2 halbrund ausgebildet, da hierdurch ein gutes Reflexionsverhalten erreicht werden kann. Es sind aber auch andere, insbesondere rotationssymmetrische, Formen denkbar.

Des Weiteren ist vorgesehen, die Messergebnisse hinsichtlich der Hintergrundstrahlung, der Wellenlänge des verwendeten Lichtes, der Temperatur und des Materials des Sensorkopfes zu kalibrieren. Hierbei handelt es sich jedoch um im Stand der Technik bekannte Verfahren.

Für die Messung der Temperatur ist vorgesehen, Moleküle/Partikel eines Lumineszenzfarbstoffs 9 in den Sensorkopf 2 einzulagern. Die Moleküle/Partikel des Lumineszenzfarbstoffs 9 können weitgehend homogen in dem Körper des Sensorkopfes 2 verteilt sein, oder auch als Schicht 10 aufgebracht sein, vorzugsweise im Bereich des Ausgangs der Lichtempfangsfaser 5. Hierdurch kann der Lumineszenzfarbstoff besonders effektiv durch reflektiertes Licht angeregt und in die Lichtempfangsfaser 5 eingekoppelt werden

Der Lumineszenzfarbstoff 9 wird mittels eines von der Lichtquelle ausgesandten Lichtpuls angeregt, der vorzugsweise im kurzwelligen Wellenlängenbereich liegt, wobei die Wellenlänge des von den Lumineszenzfarbstoffmolekülen 9 ausgestrahlten Lichtes meist größer ist als die Wellenlänge des anregenden Lichtes. Die Intensität des abgestrahlten Lumineszenzlichtes nimmt als Funktion der Zeit ab und zeichnet sich durch eine zeitabhängige Charakteristik mit einer Abklingzeit aus, die abhängig von der Temperatur ist und im Wesentlichen unabhängig von der Intensität der Anregungsstrahlung. Aus der Feststellung und Messung der Abklingzeit der abnehmenden Intensitätsfunktion der Lumineszenz kann die Temperatur somit bestimmt werden.

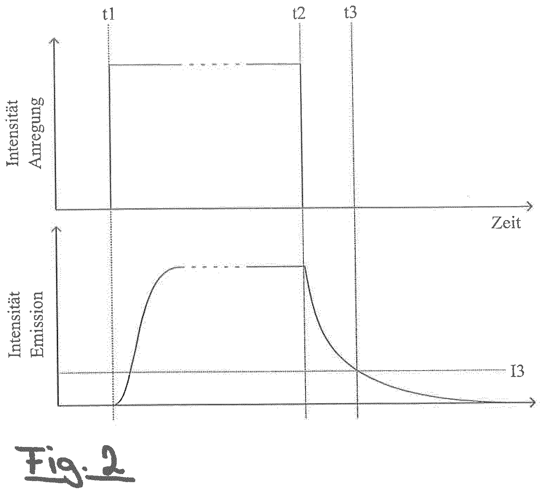

Dies ist in Fig. 2 schematisch dargestellt, in der die zeitliche Anregungskurve des anregenden Lichtes und die Abklingkurve der Intensität des ausgesendeten Lumineszenzlichtes dargestellt ist. Zur Messung von Betauung und Temperatur wird in einem ersten Schritt die Anregungslichtquelle eingeschaltet (Zeitpunkt t1). Bei Verwendung von nur einer Lichtquelle ist ab diesem Zeitpunkt die erste Gelegenheit für eine Messung des Betauungszustandes. Nach dem Abschalten der Anregungslichtquelle (Zeitpunkt t2) wird der Abklingvorgang der Lumineszenz des Farbstoffs im Sensorkopf über den Zeitverlauf gemessen. Dabei kann als zweite Möglichkeit zur Messung des Betauungszustandes die absolute Intensität gemessen sowie zur Messung der Temperatur die Zeitkonstante des Abklingvorgangs bestimmt werden. Dazu stehen verschiedene Verfahren zur Verfügung, im einfachsten Fall eine Messung der Zeit bis zum Erreichen eines festgelegten Bruchteils des Maximalwertes (Zeitpunkt t3). Das Abklingverhalten des Farbstoffs in Abhängigkeit von der Temperatur wird als Tabelle oder in anderer Form in der Auswerteeinheit hinterlegt und erlaubt so einen Rückschluss von der gemessenen Abklingzeit auf die Temperatur.

Für die Messung der Intensitätsfunktion der Abklingkurve kann das gesamte Emissionsspektrum des Lumineszenzfarbstoffs 9 verwendet werden. Da die Messung von Temperatur und Betauung durch das zeitabhängige Verhalten des empfangenden Lichts getrennt werden kann, ist es weder notwendig, im Detektor nach Wellenlängen zu unterscheiden, noch für die Messung des Betauungszustandes und die Messung der Temperatur unterschiedliche Wellenlängen zu verwenden.

Vorzugsweise wird als Lumineszenzfarbstoff Magnesiumfluorgermanat verwendet, da dieser sich durch genau zu bestimmende Abklingzeiten auszeichnet und auch auf lange Zeit stabil ist.

Da mit der erfindungsgemäßen Messvorrichtung die Temperatur bestimmt werden kann, kann somit bei einsetzender Betauung die Taupunkttemperatur ermittelt werden, woraus wiederum die relative Feuchte bestimmt werden kann.

Hierzu kann des Weiteren vorgesehen sein, den Sensorkopf 2 zu heizen oder zu kühlen, um eine Messung der relativen Luftfeuchte zu ermöglichen. Insbesondere kann ein Peltierelement für die Kühlung eingesetzt werden. Es können aber auch Kühlmittel, wie z.B. Glykol, eingesetzt werden.

Aufgrund des optischen Messprinzips ist der Sensorkopf völlig frei von elektronischen Bauteilen und frei von Metallteilen, so dass er sowohl für die Messung von Betauungszuständen als auch für die Temperatur in explosionsgefährdeten Bereichen oder Hochspannungsanlagen einsetzbar ist.

Des Weiteren zeichnet sich der Sensor durch einen sehr einfachen Aufbau aus, so dass er entsprechend kostengünstig gefertigt werden kann.

**Bezugszeichenliste**

| | |
|---|---|
| Faseroptische Messvorrichtung | 1 |
| Sensorkopf | 2 |
| Unterseite | 3 |
| Lichtsendefaser | 4 |
| Lichtempfangsfaser | 5 |
| Randbereich | 6 |
| Grenzfläche | 7 |
| Flüssigkeitströpfchen | 8 |
| Lumineszenzfarbstoff | 9 |
| Schicht | 10 |

## Patentansprüche

1. Faseroptische Messvorrichtung (1), die für eine Messung eines Benetzungszustandes und einer Temperatur eingerichtet ist,
wobei die faseroptische Messvorrichtung (1) einen optisch transparenten Sensorkopf (2) aufweist, der mit zumindest einer Lichtsendefaser (4) und zumindest einer Lichtempfangsfaser (5) verbunden ist, und mit einer Lichtquelle, die direkt oder wirkungsmäßig mit der Lichtsendefaser (4) verbunden ist, wobei die Lichtsendefaser (4) eingerichtet ist, zumindest einen Teil des Lichtes der Lichtquelle in den Sensorkopf (2) zu leiten, welches an zumindest einer optischen Grenzschicht (7) des Sensorkopfes (2) mindestens einmal reflektiert wird und in die Lichtempfangsfaser (5) ausgekoppelt wird, und
wobei die Lichtempfangsfaser (5) mit einem Lichtdetektor verbunden ist,
wobei in dem Sensorkopf (2) zumindest ein temperaturabhängiger Lumineszenzfarbstoff (9) eingelagert ist, der mittels des in die Lichtsendefaser (4) eingekoppelten Lichtes anregbar ist, und eine Abklingzeit eines Lumineszenzlichtes des Lumineszenzfarbstoffs von dem Lichtdetektor messbar ist, wobei das Lumineszenzlicht mittels der Lichtempfangsfaser (5) an den Lichtdetektor übertragbar ist,
wobei eine einzige Lichtquelle vorgesehen ist, die Licht im kurzwelligen Wellenbereich, insbesondere in einem Wellenlängenbereich von 390-420 nm, aussendet,
oder dass eine einzige Lichtquelle vorgesehen ist, die Licht im kurzwelligen Wellenlängenbereich, insbesondere in einem Wellenlängenbereich von 390-420 nm, und im langwelligen Wellenbereich aussendet,
oder eine erste Lichtquelle für die Einkopplung von Licht zur Reflexion an der Grenzschicht (7) des Sensorkopfes (2) und eine zweite Lichtquelle für die Anregung des Lumineszenzfarbstoffs (9) vorgesehen ist, wobei die erste Lichtquelle im sichtbaren Wellenlängenbereich und die zweite Lichtquelle im kurzwelligen Wellenlängenbereich Licht aussendet;
wobei die faseroptische Messvorrichtung eingerichtet ist, den Benetzungszustand aus einem Verhältnis zwischen der Intensität von aus der Lichtempfangsfaser (5) ausgekoppeltem Licht zu der Intensität von eingekoppeltem Licht zu ermitteln.

2. Faseroptische Messvorrichtung nach Anspruch 1, **dadurch gekennzeichnet, dass** die erste Lichtsendefaser (4) und die zweite Lichtempfangsfaser (5) eine gemeinsame Lichtleitfaser zum Senden und Empfangen ausbilden für die Einkopplung von Licht und die Auskopplung von reflektiertem Licht und Lumineszenzlicht.

3. Faseroptische Messvorrichtung nach einem der vorhergehenden Ansprüche, **dadurch gekennzeichnet, dass** als Lumineszenzfarbstoff (9) anorganische und/oder organische Farbstoffe und/oder Nanokristalle verwendet werden.

4. Faseroptische Messvorrichtung nach Anspruch 3, **dadurch gekennzeichnet, dass** als Lumineszenzfarbstoff (9) Magnesiumfluorgermanat verwendet wird.

5. Faseroptische Messvorrichtung nach einem der vorhergehenden Ansprüche, **dadurch gekennzeichnet, dass** der Sensorkopf (2) aus PMMA (Polymethylmethacrylat) besteht.

6. Faseroptische Messvorrichtung nach einem der vorhergehenden Ansprüche, **dadurch gekennzeichnet, dass** der Lumineszenzfarbstoff (9) annähernd homogen in dem Sensorkopf (2) verteilt ist.

7. Faseroptische Messvorrichtung nach einem der vorhergehenden Ansprüche 1 - 5, **dadurch gekennzeichnet, dass** der Lumineszenzfarbstoff (9) in Form einer Schicht im Sensorkopf (2), insbesondere im Bereich des Ausgangs der Lichtempfangsfaser, angebracht ist.

8. Faseroptische Messvorrichtung nach einem der vorhergehenden Ansprüche, **dadurch gekennzeichnet, dass** die Lichtsendefaser (4) und die Lichtempfangsfaser (5) sowie die optische Grenzschicht (7) im Sensorkopf (2) so zueinander ausgerichtet sind, dass der Übergang vom unbetauten zum betauten Zustand messbar ist.

9. Faseroptische Messvorrichtung nach einem der vorhergehenden Ansprüche, **dadurch gekennzeichnet, dass** der Sensorkopf halbrund ausgebildet ist.

10. Faseroptische Messvorrichtung nach einem der vorhergehenden Ansprüche, **dadurch gekennzeichnet, dass** zumindest ein Teil einer Oberfläche des Sensorkopfes durch ein Kühl- und/oder Heizsystem gezielt temperierbar ist.

11. Faseroptische Messvorrichtung nach Anspruch 10, **dadurch gekennzeichnet, dass** die Sensorkopfoberfläche das kälteste nach außen gerichtete Strukturelement ist.

12. Faseroptische Messvorrichtung nach Anspruch 10, **dadurch gekennzeichnet, dass** eine Direkttemperierung durch Aufbringen von Metall- und Halbleiterstrukturen nach dem Funktionsprinzip des Peltiereffektes erfolgt.

13. Faseroptische Messvorrichtung nach Anspruch 10, **dadurch gekennzeichnet, dass** eine Kühlung mit einem Kühlmittel, insbesondere Glykol, vorgesehen ist.

14. Verfahren zur Bestimmung eines Betauungszustandes und einer Temperatur eines Sensorkopfes (2) mit folgenden Schritten:
a) Licht wird von einer Lichtquelle über eine Lichtsendefaser (4) in den Sensorkopf (2) gesendet, der eine optische wirksame Grenzschicht (7) und zumindest einen Lumineszenzfarbstoff (9) aufweist,
b) das Licht wird an der Grenzschicht (7) reflektiert und in eine Lichtempfangsfaser (5) ausgekoppelt und einem Lichtdetektor zugeführt,
c) eine Lichtintensität des ausgekoppelten Lichtes wird von dem Lichtdetektor gemessen,
d) und aus einem Verhältnis zwischen der Intensität des aus der Lichtempfangsfaser (5) ausgekoppelten Lichtes zu der Intensität des eingekoppelten Lichtes wird der Betauungszustand ermittelt, und
e) von dem Lumineszenzfarbstoff (9) ausgesendetes Lumineszenzlicht wird in die Lichtempfangsfaser (5) ausgekoppelt und dem Lichtdetektor zugeführt,
f) eine Intensität des Lumineszenzlichtes wird in Abhängigkeit von der Zeit gemessen, und
g) eine Abklingzeit für die Intensität des Lumineszenzlichtes wird bestimmt und aus der Abklingzeit wird die Temperatur des Sensorkopfes ermittelt,
h) wobei eine einzige Lichtquelle verwendet wird, die Licht im kurzwelligen Wellenbereich, insbesondere in einem Wellenlängenbereich von 390-420 nm, aussendet, oder eine einzige Lichtquelle verwendet wird, die Licht im kurzwelligen Wellenlängenbereich, insbesondere in einem Wellenlängenbereich von 390-420 nm, und im langwelligen Wellenbereich aussendet, oder eine erste Lichtquelle für die Einkopplung von Licht zur Reflexion an der Grenzschicht (7) des Sensorkopfes (2) und eine zweite Lichtquelle für die Anregung des Lumineszenzfarbstoffs (9) vorgesehen ist, wobei die erste Lichtquelle im sichtbaren Wellenlängenbereich und die zweite Lichtquelle im kurzwelligen Wellenlängenbereich Licht aussendet.

## Claims

1. Fibre-optic measurement apparatus (1), which is set up for measuring a wetness state and a temperature,
wherein the fibre-optic measurement apparatus (1) has an optically transparent sensor head (2), which is connected to at least one light-transmitting fibre (4) and at least one light-receiving fibre (5), and having a light source, which is connected directly or effectively to the light-transmitting fibre (4), wherein the light-transmitting fibre (4) is set up to guide at least some of the light of the light source into the sensor head (2), which is reflected at least once at at least one optical interface (7) of the sensor head (2) and is coupled into the light-receiving fibre (5), and
wherein the light-receiving fibre (5) is connected to a light detector,
wherein embedded in the sensor head (2) is at least one temperature-dependent luminescent dye (9), which is excitable using the light that has been coupled into the light-transmitting fibre (4), and a decay time of a luminescent light of the luminescent dye is detectable by the light detector, wherein the luminescent light is transmittable to the light detector using the light-receiving fibre (5),
wherein a single light source is provided which emits light in the short-wave wavelength range, in particular in a wavelength range of 390-420 nm,
or in that a single light source is provided which emits light in the short-wave wavelength range, in particular in a wavelength range of 390-420 nm, and in the long-wave wavelength range,
or a first light source for coupling in light for reflection at the interface (7) of the sensor head (2) and a second light source for exciting the luminescent dye (9) are provided, wherein the first light source emits light in the visible wavelength range and the second light source emits light in the short-wave wavelength range;
wherein the fibre-optic measurement apparatus is set up to ascertain the wetness state from a ratio of the intensity of light that has been coupled out of the light-receiving fibre (5) to the intensity of coupled-in light.

2. Fibre-optic measurement apparatus according to Claim 1, **characterized in that** the first light-transmitting fibre (4) and the second light-receiving fibre (5) form a common light-guide fibre for transmitting and receiving, for coupling in light and coupling out reflected light and luminescence light.

3. Fibre-optic measurement apparatus according to one of the preceding claims, **characterized in that** inorganic and/or organic dyes and/or nanocrystals are used as the luminescent dye (9).

4. Fibre-optic measurement apparatus according to Claim 3, **characterized in that** magnesium fluorogermanate is used as the luminescent dye (9).

5. Fibre-optic measurement apparatus according to one of the preceding claims, **characterized in that** the sensor head (2) consists of PMMA (polymethyl methacrylate).

6. Fibre-optic measurement apparatus according to one of the preceding claims, **characterized in that** the luminescent dye (9) is distributed approximately homogeneously in the sensor head (2).

7. Fibre-optic measurement apparatus according to one of the preceding Claims 1-5, **characterized in that** the luminescent dye (9) is attached, in the form of a layer, in the sensor head (2), in particular in the region of the exit of the light-receiving fibre.

8. Fibre-optic measurement apparatus according to one of the preceding claims, **characterized in that** the light-transmitting fibre (4) and the light-receiving fibre (5) and also the optical interface (7) are oriented in the sensor head (2) with respect to one another such that the transition from the state without condensation to the state with condensation is measurable.

9. Fibre-optic measurement apparatus according to one of the preceding claims, **characterized in that** the sensor head has a semi-circular form.

10. Fibre-optic measurement apparatus according to one of the preceding claims, **characterized in that** at least part of a surface of the sensor head is able to be temperature-controlled in a targeted fashion using a cooling and/or heating system.

11. Fibre-optic measurement apparatus according to Claim 10, **characterized in that** the sensor head surface is the coldest outwardly oriented structural element.

12. Fibre-optic measurement apparatus according to Claim 10, **characterized in that** direct temperature control is performed by applying metal and semiconductor structures in accordance with the functional principle of the Peltier effect.

13. Fibre-optic measurement apparatus according to Claim 10, **characterized in that** cooling using a coolant, in particular glycol, is provided.

14. Method for determining a state of condensation and a temperature of a sensor head (2), having the following steps:
a) light is transmitted via a light-transmitting fibre (4) from a light source into the sensor head (2), which has an optically effective interface (7) and at least one luminescent dye (9),
b) the light is reflected at the interface (7) and coupled out into a light-receiving fibre (5) and directed onto a light detector,
c) a light intensity of the coupled-out light is measured by the light detector,
d) and the state of condensation is ascertained from a ratio of the intensity of the light that has been coupled out of the light-receiving fibre (5) to the intensity of the coupled-in light, and
e) luminescence light emitted by the luminescent dye (9) is coupled out into the light-receiving fibre (5) and directed onto the light detector,
f) an intensity of the luminescence light is measured as a function of time, and
g) a decay time for the intensity of the luminescence light is determined and the temperature of the sensor head is ascertained from the decay time,
h) wherein a single light source is used which emits light in the short-wave wavelength range, in particular in a wavelength range of 390-420 nm, or a single light source is used which emits light in the short-wave wavelength range, in particular in a wavelength range of 390-420 nm, and in the long-wave wavelength range, or a first light source is provided for coupling in light for reflection at the interface (7) of the sensor head (2) and a second light source is provided for the excitation of the luminescent dye (9), wherein the first light source emits light in the visible wavelength range and the second light source emits light in the short-wave wavelength range.

## Revendications

1. Dispositif de mesure à fibre optique (1) adapté pour mesurer un état de mouillage et une température,
dans lequel le dispositif de mesure à fibre optique (1) comprend une tête de capteur (2) optiquement transparente reliée à au moins une fibre émettrice de lumière (4) et au moins une fibre de réception de lumière (5), et avec une source de lumière qui est reliée directement ou de manière fonctionnelle à la fibre émettrice de lumière (4), la fibre émettrice de lumière (4) étant adaptée pour conduire au moins une partie de la lumière de la source de lumière dans la tête de capteur (2), reflétée au moins une fois à au moins une couche limite optique (7) de la tête de capteur (2) et extraite dans la fibre de réception de lumière (5), et
dans lequel la fibre de réception de lumière (5) est reliée à un détecteur de lumière,
dans lequel au moins un colorant luminescent (9) qui dépend de la température est incorporé dans la tête de capteur (2), qui est apte à être excité moyennant la lumière introduite dans la fibre émettrice de lumière (4), et un temps de déclin d'une lumière luminescente du colorant luminescent peut être mesuré par le détecteur de lumière, la lumière luminescente étant transmissible au détecteur de lumière moyennant la fibre de réception de lumière (5),
dans lequel une seule source de lumière est prévue, qui émet de la lumière dans la gamme d'ondes à ondes courtes, notamment dans une gamme de longueurs d'ondes de 390 à 420 nm,
ou qu'une seule source de lumière est prévue qui émet de la lumière dans la gamme de longueurs d'ondes à ondes courtes, notamment dans une gamme de longueurs d'ondes de 390 à 420 nm, et dans la gamme d'ondes à ondes longues,
ou une première source de lumière est prévue pour l'introduction de lumière pour une réflexion à la couche limite (7) de la tête de capteur (2) et une deuxième source de lumière est prévue pour l'excitation du colorant luminescent (9), la première source de lumière émettant de la lumière dans la gamme de longueurs d'ondes visible et la deuxième source de lumière émettant de la lumière dans la gamme de longueurs d'ondes à ondes courtes,
le dispositif de mesure à fibre optique étant configuré pour déterminer l'état de mouillage moyennant un rapport entre l'intensité de lumière extraite de la fibre de réception de lumière (5) et l'intensité de lumière introduite.

2. Dispositif de mesure à fibre optique selon la revendication 1, **caractérisé en ce que** la première fibre émettrice de lumière (4) et la deuxième fibre de réception de lumière (5) forment une fibre optique commune pour l'émission et la réception pour l'introduction de lumière et l'extraction de lumière reflétée et de lumière luminescente.

3. Dispositif de mesure à fibre optique selon l'une quelconque des revendications précédentes, **caractérisé en ce que** des colorants inorganiques et/ou organiques et/ou des nanocristaux sont utilisés comme colorant luminescent (9).

4. Dispositif de mesure à fibre optique selon la revendication 3, **caractérisé en ce qu'**un fluorogermanate de magnésium est utilisé comme colorant luminescent (9).

5. Dispositif de mesure à fibre optique selon l'une quelconque des revendications précédentes, **caractérisé en ce que** la tête de capteur (2) est constituée de PMMA (polyméthacrylate de méthyle).

6. Dispositif de mesure à fibre optique selon l'une quelconque des revendications précédentes, **caractérisé en ce que** le colorant luminescent (9) est réparti de manière à peu près homogène dans la tête de capteur (2).

7. Dispositif de mesure à fibre optique selon l'une quelconque des revendications 1 à 5, **caractérisé en ce que** le colorant luminescent (9) est fixé dans la tête de capteur (2) sous forme d'une couche, notamment dans la région de la sortie de la fibre de réception de lumière.

8. Dispositif de mesure à fibre optique selon l'une quelconque des revendications précédentes, **caractérisé en ce que** la fibre émettrice de lumière (4) et la fibre de réception de lumière (5) ainsi que la couche limite optique (7) sont alignées dans la tête de capteur (2) les unes par rapport aux autres de telle manière que la transition de l'état non-humidifié à l'état humidifié soit mesurable.

9. Dispositif de mesure à fibre optique selon l'une quelconque des revendications précédentes, **caractérisé en ce que** la tête de capteur est réalisée en une forme semi-circulaire.

10. Dispositif de mesure à fibre optique selon l'une quelconque des revendications précédentes, **caractérisé en ce qu'**au moins une partie d'une surface de la tête de capteur peut être tempérée de manière ciblée par un système de refroidissement et/ou de chauffage.

11. Dispositif de mesure à fibre optique selon la revendication 10, **caractérisé en ce que** la surface de tête de capteur est l'élément structurel le plus froid orienté vers l'extérieur.

12. Dispositif de mesure à fibre optique selon la revendication 10, **caractérisé en ce qu'**une températion directe est effectuée par application de structures de métaux et de semi-conducteurs selon le principe de fonctionnement à effet Peltier.

13. Dispositif de mesure à fibre optique selon la revendication 10, **caractérisé en ce qu'**un refroidissement avec un fluide de refroidissement, notamment du glycol, est prévu.

14. Procédé de détermination d'un état de mouillage et d'une température d'une tête de capteur (2), comprenant les étapes suivantes :
a) on émet de la lumière par une fibre émettrice de lumière (4) d'une source de lumière dans la tête de capteur (2) qui comprend une couche limite (7) optiquement active et au moins un colorant luminescent (9),
b) la lumière est reflétée à la couche limite (7) et est extraite dans une fibre de réception de lumière (5) et fournie à un détecteur de lumière,
c) une intensité de lumière de la lumière extraite est mesurée par le détecteur de lumière,
d) et l'état de mouillage est déterminé moyennant un rapport entre l'intensité de la lumière extraite de la fibre de réception de lumière (5) et l'intensité de la lumière introduite, et
e) la lumière émise par le colorant luminescent (9) est extraite dans la fibre de réception de lumière (5) et est fournie au détecteur de lumière,
f) une intensité de la lumière luminescente est mesurée en fonction du temps, et
g) un temps de déclin pour l'intensité de la lumière luminescente est déterminé et la température de la tête de capteur est déterminée moyennant le temps de déclin,
h) dans lequel une seule source de lumière est utilisée, qui émet de la lumière dans une gamme d'ondes à ondes courtes, notamment dans une gamme de longueurs d'ondes de 390 à 420 nm, ou une seule source de lumière est utilisée qui émet de la lumière dans la gamme de longueurs d'ondes à ondes courtes, notamment dans une gamme de longueurs d'ondes de 390 à 420 nm et dans la gamme d'ondes à ondes longues, ou une première source de lumière est prévue pour l'introduction de lumière pour une réflexion à la couche limite (7) de la tête de capteur (2) et une deuxième source de lumière est prévue pour l'excitation du colorant luminescent (9), la première source de lumière émettant de la lumière dans la gamme de longueurs d'ondes visible et la deuxième source de lumière émettant de la lumière dans la gamme de longueurs d'ondes à ondes courtes.
